# EUROPEAN PATENT APPLICATION

(11) **EP 1 021 054 A2**
(43) Date of publication of application: **19.07.2000**
(21) Application number: 00300002.3
(22) Date of filing: 05.01.2000
(51) Int. Cl.: H04Q 7/24

(54) **Mobile communication system and mobile communication terminal**

(30) Priority: 11.01.1999 JP 463799
(71) Applicant: Sony Computer Entertainment Inc., Tokyo 107-0052 (JP)
(72) Inventor: Kawai, Eiji.c/o Sony Computer Ent.Inc, Minato-ku Tokyo 107-0052 (JP)
(74) Representative: Turner, James Arthur

(57) **Abstract**

A mobile communication system has a circuit network (28), a plurality of reception base stations (26) connected to said circuit network (28), and a transmission base station (32) connected to said circuit network, for sending a radio wave to respective areas covered by said mobile communication terminals (26). When communications are performed between two mobile communication terminals (30), information is sent upstream from one of the mobile communication terminals (30) in an area (A) via the closest reception base station (26) to the circuit network (28), and then sent downstream from the circuit network (28) via the transmission base station (32) on a radio wave to the other mobile communication terminal (30) in an area (C). Since the radio wave sent from the transmission base station (32) reaches all areas (A, B, C, D) covered by the respective reception base stations (26), each of the mobile communication terminals (30) is not required to send a radio wave for indicating its own location. As no upstream traffic is needed for sending such a radio wave, the traffic of the circuit network (28) is greatly reduced.

## Description

The present invention relates to mobile communication system, for example (though not exclusively) systems which can use portable telephone sets, PHS (Personal Handy-phone System) sets, etc. as mobile communication terminals, and a mobile communication terminal for use in such a mobile communication system.

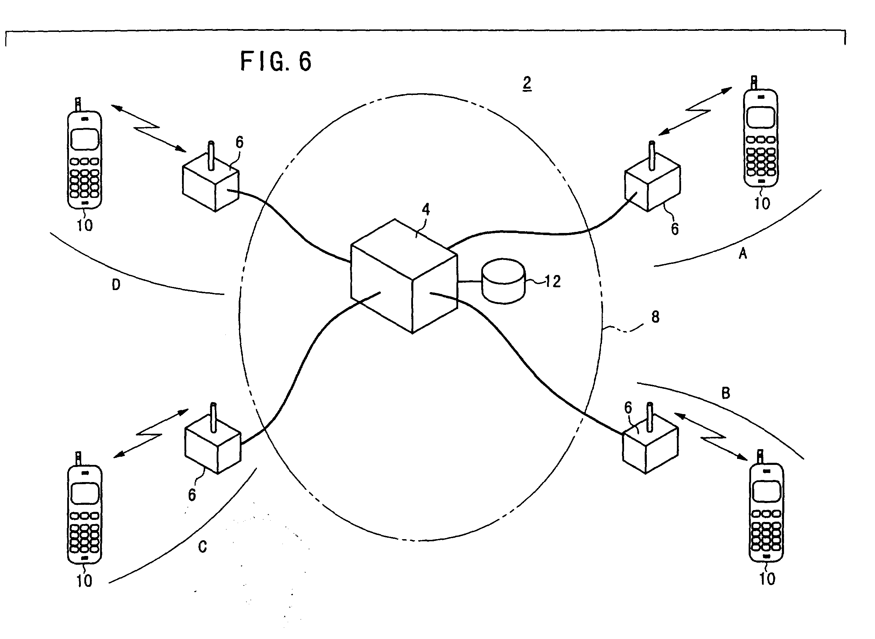

FIG. 6 of the accompanying drawings schematically shows a basic arrangement of a conventional mobile communication system 2 for portable telephone.

As shown in FIG. 6, the conventional mobile communication system 2 has a mobile communication exchange 4 to which a plurality of base stations 6 are connected by respective dedicated ground lines.

The mobile communication exchange 4 is also connected to another mobile communication exchange or a telephone network (not illustrated), making up a ground circuit network 8.

The base stations 6 connected to the ground circuit network 8 are positioned in respective zones A, B, C, D and basically arranged to be able to send calls to and receive calls from mobile communication terminals 10 positioned in the respective zones A, B, C, D. Actually, two adjacent ones of the zones A, B, C, D, e.g., the zones A, B, overlap each other for signal reception by the respective base stations 6 in order to ensure uninterrupted communications when a mobile communication terminal 10 moves from the zone A to the zone B.

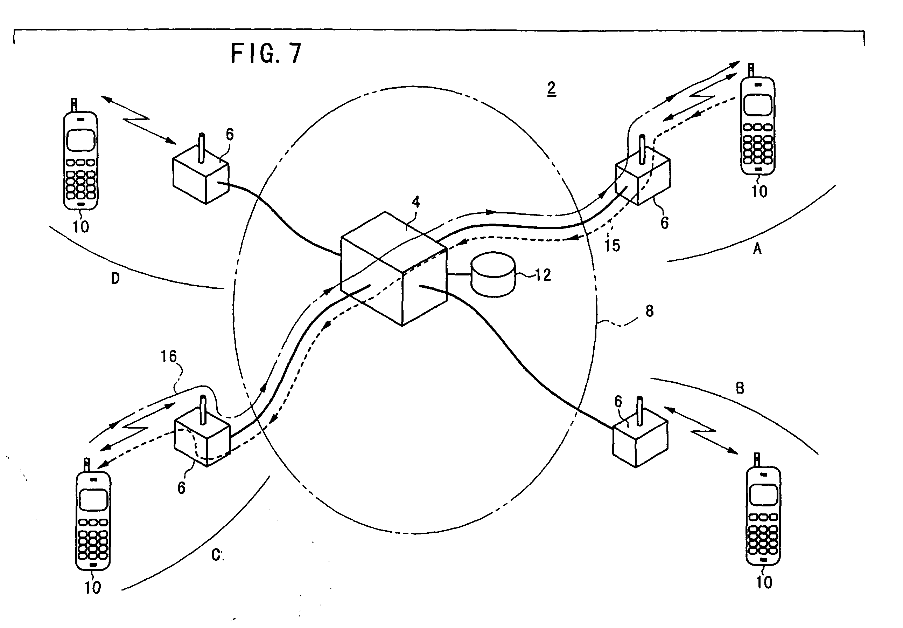

For two mobile communication terminals 10 to perform bidirectional communications therebetween in the conventional mobile communication system 2 shown in FIG. 6, a radio wave carrying information sent from one of the mobile communication terminals 10 in the zone A is received by the base station 6 in the zone A, transmitted via the ground circuit network 8, and sent from the base station 6 in the zone C to the other mobile communication terminal 10 positioned in the zone C, along a route indicated by the dotted line 15 with arrowheads shown in FIG. 7.

When the other mobile communication terminal 10 responds to the signal, the mobile communication exchange 4 establishes a link, allowing bidirectional communications, e.g., speech communications, between the mobile communication terminals 10 along the route represented by the dotted line 15 with arrowheads and the dot-and-dash line 16 with arrowheads shown in FIG. 7.

With the conventional mobile communication system 2 shown in FIG. 6, in order for the mobile communication exchange 4 to establish a link quickly, the mobile communication exchange 4 needs to recognize at all times which of the zones A, B, C, D each of the mobile communication terminals 10 is positioned in.

For such zone recognition, a location register 12 in the form of a position register memory is connected to the mobile communication exchange 4. Each of the mobile communication terminals 10 is required to be turned on at all times and continuously send a radio wave carrying its own identification code (ID) to indicate its own position to the mobile communication exchange 4 even while the mobile communication terminal 10 is not performing any communications (speech communications). The zone where the base station 6 which catches the sent radio wave is located is registered in the location register 12 as the zone where the mobile communication terminal 10 is currently positioned.

Since each of the mobile communication terminals 10 is required to send a radio wave indicative of its own location continuously (at certain intervals) to the base station 6 even while the mobile communication terminal 10 is not performing any communications, the contractor who owns the mobile communication terminal 10 has to pay a certain fixed fee (a basic monthly charge or the like) regardless of whether the contractor has made calls or not. In addition, the conventional mobile communication system 2 has to bear a running cost for such a location registration service.

Another problem is that because each of the mobile communication terminals 10 is required to send a location-indicating radio wave indicative of its own location at certain intervals to the base station 6, a certain amount of electric energy stored in the battery-powered mobile communication terminal 10 is consumed by sending the location-indicating radio wave, resulting in a corresponding reduction in the time that can be spent by the mobile communication terminal 10 for carrying out actual communications.

Inasmuch as the mobile communication terminals 10 are usually designed to be portable, they should preferably be as small and light as possible and able to be used for a long period of time. Efforts to reduce the amount of continuously usable electric energy in the mobile communication terminals 10 are always made for the purpose of reducing the size and weight of the battery and increasing the period of time for which the battery can be used.

As the number of mobile communication terminals 10 of the conventional mobile communication system 2 increases, the traffic of the ground circuit network 8 increases. There have always been demands for effective techniques for handling the increased traffic of the ground circuit network 8 for the ease with which to make telephone calls and also for smooth communications.

Various respective aspects of the invention are defined in the appended claims.

Embodiments of the present invention can provide a mobile communication system which is capable of effectively exploiting an infrastructure of existing communication networks and existing mobile communication terminals.

Embodiments of the present invention can provide a mobile communication system which makes it unnecessary for mobile communication terminals to send radio waves indicative of their present locations.

Embodiments of the present invention can provide a mobile communication system and a mobile communication terminal which are able to provide new services that have not been available in conventional mobile communication systems.

According to the present invention, a mobile communication system has a plurality of reception base stations and at least one transmission base station which are connected to a circuit network. When communications are performed between mobile communication terminals, one of the mobile communication terminals sends information upstream via the corresponding reception base station to the circuit network, and the information from the circuit network is sent downstream via the transmission base station on a radio wave to the other of the mobile communication terminals.

Since each of the mobile communication terminals receives a radio wave sent from the transmission base station, each of the mobile communication terminals is not required to send a radio wave indicative of its own location. The range which is covered by the radio wave sent from the transmission base station may be at least a range including areas in which the reception base stations receive radio waves from the mobile transmission terminals.

Because each of the mobile communication terminals is not required to send a radio wave indicative of its own location, no traffic is needed for such a radio wave via an upstream communication infrastructure (the reception base stations and the circuit network), and hence the overall traffic via the upstream communication infrastructure is greatly reduced.

In each of the mobile communication terminals, the range covered by a radio wave radiated from a radio transmission assembly is smaller than the range in which a radio reception assembly can receive a radio wave. This arrangement allows the mobile communication terminals to match a communication infrastructure according to the present invention.

Each of the mobile communication terminals has a function to discriminate an inherent identification code, and the transmission base station sends the information with an inherent identification code allocated thereto to the other of the mobile communication terminals, and the other of the mobile communication terminals is capable of receiving remaining information other than the inherent identification code only when the other of the mobile communication terminals discriminates the inherent identification code allocated to the information.

With such a function, broadcast information sent downstream can selectively be received by the mobile communication terminal which can discriminates the inherent identification code allocated to the information.

In a mobile communication terminal, a radio transmission assembly sends information with a radio wave radiated thereby which covers a first range, and a radio reception assembly receives information with a radio wave which can be received thereby in a second range, the first range being smaller than the second range.

The above arrangement provides a design guidance for the mobile communication terminal. The mobile communication terminal thus constructed makes it possible to carry out efficient bidirectional communications.

According to the present invention, there is also provided a mobile communication system comprising a circuit network, a plurality of reception base stations connected to the circuit network, for receiving radio waves within respective areas, at least one transmission base station connected to the circuit network, a plurality of mobile communication terminals, each of the mobile communication terminals having an inherent identification code, a function to discriminate the inherent identification code, and a function to turn on and off the function. When communications are performed between the mobile communication terminals, one of the mobile communication terminals sends information upstream via the corresponding reception base station to the circuit network, and the information from the circuit network is sent downstream via the transmission base station on a radio wave to another or a plurality of the mobile communication terminals. If the transmission base station sends the information with an inherent identification code allocated thereto, then the mobile communication terminal having the allocated inherent identification code is capable of receiving remaining information other than the inherent identification code only when the mobile communication terminal turns on the function to discriminate the inherent identification code. If the transmission base station sends the information without an inherent identification code, then all the mobile communication terminals are capable of receiving the information irrespective of whether their function to discriminate the inherent identification code is turned on or off.

While each of the mobile communication terminals evenly sends a radio wave to the corresponding reception base station, it can receive selectively a broadcast radio wave or an individual radio wave, i.e., a narrowcast radio wave, as with conventional portable telephone sets, as required. Furthermore, each of the mobile communication terminals is capable of receiving a radio wave sent from the corresponding reception base station irrespective of whether the function to discriminate the inherent identification code is turned on or off.

In the mobile communication system according to the present invention, while the mobile communication terminals send information upstream as a narrowcast communication for requesting (designating) information content, information having the information content is sent downstream from the transmission base station as a broadcast radio wave to the mobile communication terminals. Since the information content having a lots of data is sent as a broadcast radio wave, the traffic in the circuit network etc. can be decreased.

The invention will now be described by way of example with reference to the accompanying drawings, throughout which like parts are referred to by like references, and in which:
FIG. 1 is a schematic perspective view of a mobile communication system according to the present invention;
FIG. 2 is a block diagram of a mobile communication terminal according to the present invention;
FIG. 3 is a schematic perspective view illustrative of the manner in which bidirectional communications are performed by the mobile communication system according to the present invention;
FIG. 4 is a schematic diagram showing the mobile communication system according to the present invention as combined with an existing infrastructure;
FIG. 5 is a schematic diagram showing other embodiment of the mobile communication system according to the present invention;
FIG. 6 is a schematic perspective view of a conventional mobile communication system; and
FIG. 7 is a schematic perspective view illustrative of the manner in which bidirectional communications are performed by the conventional mobile communication system.

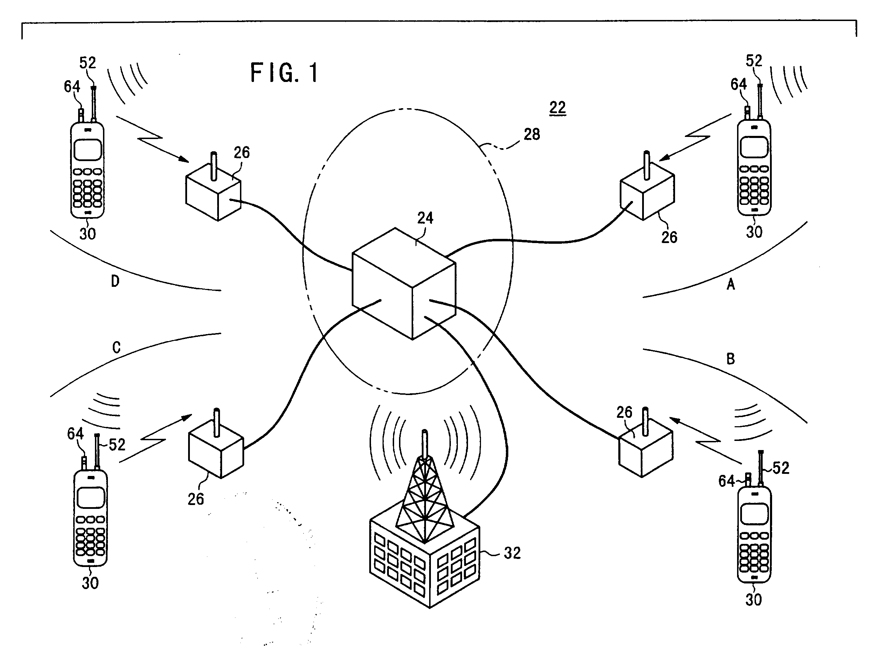

FIG. 1 schematically shows in perspective a basic arrangement of a mobile communication system 22 for portable telephone according to the present invention. The mobile communication system 22 is constructed using the infrastructure of the existing mobile communication system 2 for portable telephone shown in FIG. 6, but may be newly constructed independently of the existing infrastructure.

The mobile communication system 22 has a mobile communication exchange 24 to which a plurality of base stations 26 are connected by respective dedicated ground lines.

The mobile communication exchange 24 is also connected to another mobile communication exchange or a telephone network(not illustrated), making up a ground circuit network 28 around the mobile communication exchange 24.

The base stations 26 connected to the ground circuit network 28 are positioned in respective zones or areas A, B, C, D and basically arranged to be able to send calls to and receive calls from mobile communication terminals 30 positioned in the respective zones A, B, C, D. Actually, two adjacent ones of the zones A, B, C, D, e.g., the zones A, B, overlap each other for signal reception by the respective base stations 26 in order to ensure uninterrupted communications when a mobile communication terminal 30 moves from the zone A to the zone B. While the four zones or areas A, B, C, D are shown in FIG. 1, the mobile communication system 22 may have more or less zones or areas.

Each of the base stations 26 may serve as a base station dedicated for receiving signals. However, if an existing infrastructure is relied upon, as described later on, then the existing base stations 6 (see FIG. 6) for both sending and receiving signals may directly be used. Each of the base stations 26 is required to have at least a signal receiving function.

To the mobile communication exchange 24 of the ground circuit network 28, there is connected at least one transmission base station 32 arranged to be able to send radio waves to all the areas A, B, C, D covered by the respective base stations 26. The transmission base station 32 can broadcast signals as with existing broadcasting stations.

In the illustrated embodiment, narrowcast unidirectional communications are performed between the mobile communication terminals 30 and the base stations 26.

The range which is covered by radio waves radiated from the transmission base station 32 depends on the sending and receiving capabilities of the mobile communication terminals 30 and the receiving capability of the base stations 26. In view of these factors, the intensity, etc. of radio waves radiated from the transmission base station 32 may be determined to establish the range in which the reception base stations 26 can receive radio waves from the mobile communication terminals 30, as a minimum range that can be covered by the transmission base station 32. Of course, the range which is covered by radio waves radiated from the transmission base station 32 may further be extended. In such an extended range, each of the mobile communication terminals 30 can operate as a reception terminal similar to a radio set or a pager.

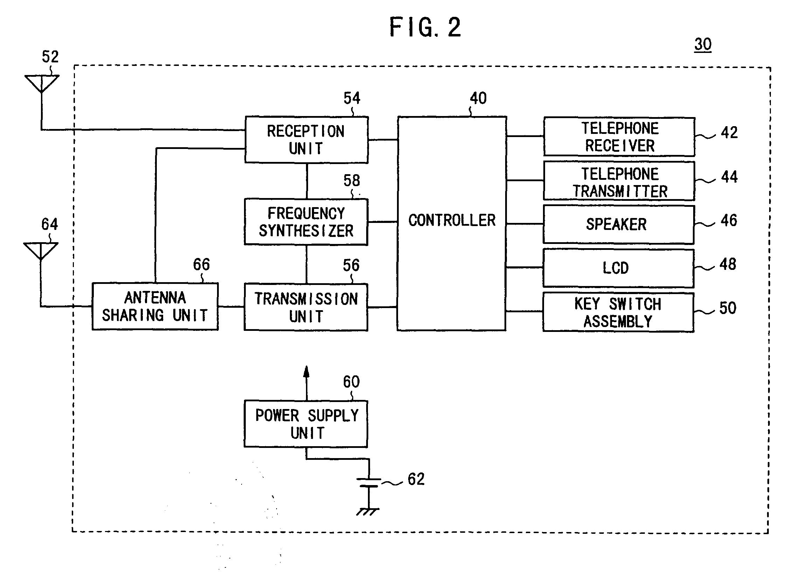

FIG. 2 shows in block form a basic electric arrangement of each of the mobile communication terminals 30. As shown in FIG. 2, the mobile communication terminal 30 has a controller 40 comprising a computer having a baseband signal processing function, an identification code discriminating function, etc. As well known in the art, the microcomputer is available as an LSI device which comprises a microprocessor (MPU) equivalent to a central processing unit (CPU), and various other peripheral devices connected to the microprocessor. The microprocessor and the peripheral devices are integrated as one-chip unit. The peripheral devices include an A/D converter, a D/A converter, an I/O port, a read-only memory (ROM) storing a control program, a system program, lookup tables, etc., a random-access memory (RAM - read/write memory) for temporarily storing processed data, a timer circuit, an interrupt processing circuit, etc.

To the controller 40, there are connected human interfaces including a telephone receiver 42, a telephone transmitter 44, a speaker 46 as a sound generating means, an LCD (liquid-crystal display unit) 48 as a display means, and a key switch assembly 50 having various key switches including a ten-key pad, a # key, a * key, an on-hook key, an off-hook key, a power supply key, etc.

To the controller 40, there are also connected a reception unit (radio reception unit for receiving information) 54 for demodulating radio waves received by a broadcast reception antenna 52, and a transmission unit (radio transmission unit for transmitting information) 56 for generating radio waves to be transmitted from a narrowcast transmission antenna 64. As with existing portable telephone sets, the mobile communication terminal 30 has an antenna sharing unit 66 connected between the antenna 64, the reception unit 54, and the transmission unit 56. The antenna sharing unit 66 allows the transmission antenna 64 to be used as a reception antenna when modes of operation of the mobile communication terminal 30 are changed by the key switch assembly 50. Thus, the mobile communication terminal 30 can be used as a conventional portable telephone set. The range covered by radio waves generated by the transmission unit 56 and radiated from the antenna 64 is smaller than the range in which radio waves can be received by the reception unit 54 via the antenna 52.

When the mobile communication terminal 30 receives broadcast signals, it is not necessary to identify the area in which the mobile communication terminal 30 is located. Therefore, the mobile communication terminal 30 does not require the location register 12 as a position registration memory described above with reference to FIG. 6. The mobile communication terminal 30 is not required to send a radio wave with its own identification code continuously to indicate its own location to the mobile communication exchange 24.

A frequency synthesizer 58 for outputting local frequencies to a mixer in the reception unit 54 and a mixer in the transmission unit 56 is also connected to the controller 40. The mobile communication terminal 30 has a power supply unit 60 for supplying electric energy to the various components thereof. The power supply unit 60 is energized by a replaceable battery 62 connected thereto. Operation of the mobile communication system 22 according to the present invention will be described below.

It is assumed that the user of a certain mobile communication terminal 30, e.g., the mobile communication terminal 30 located in the area A, wishes to send an outgoing signal to the user of another mobile communication terminal 30, e.g., the mobile communication terminal 30 located in the area C. The mobile communication terminal 30 located in the area A sends a signal carrying desired information to the base station 26 in the area A. Specifically, the user operates the key switch assembly 50 of the mobile communication terminal 30 to bring the mobile communication terminal 30 into an off-hook state and dial the telephone number. A signal carrying the dial number information (telephone number information) is sent via the controller 40, the transmission unit 56, and the transmission antenna 64 of the mobile communication terminal 30 as a narrowcast radio wave to the closest base station 26, i.e., the base station 26 in the area A, from which the signal is sent via the dedicated ground line to the mobile communication exchange 24.

At this time, the mobile communication exchange 24 does not recognize the area of the base station 26 in which the other mobile communication terminal 30 is located. The mobile communication exchange 24 sends the information received from the base station 26 in the area A evenly to the transmission base station 32.

The transmission base station 32 allocates an identification code, i.e., ID, inherent in the other mobile communication terminal 30 to the sent information, and broadcasts the information with the ID. Stated otherwise, the transmission base station 32 sends a signal carrying the information with the ID as a broadcast radio wave. The ID may comprise the dial number, i.e., the telephone number of the mobile communication terminal 30 located in the area C, which is a receiving terminal at this time.

The radio wave sent from the transmission base station 32 can be received by all the mobile communication terminals 30. However, of all the mobile communication terminals 30, only the mobile communication terminal 30 capable of discriminating the inherent identification code, i.e., the other mobile communication terminal 30 in the area C, can receive the remaining information other than the identification code.

Specifically, when the controller 40 of the other mobile communication terminal 30 in the area C discriminates the inherent identification code, the speaker 46 of the other mobile communication terminal 30 radiates a ringing tone. When the user of the other mobile communication terminal 30 takes an off-hook action, a radio wave carrying the off-hook signal is sent from the other mobile communication terminal 30 via the transmission antenna 64, and received by the closest base station 26, i.e., the base station 26 in the area C. When the off-hook signal is sent from the base station 26 in the area C to the mobile communication exchange 24, a link is connected between the base stations 26 in the areas A, C.

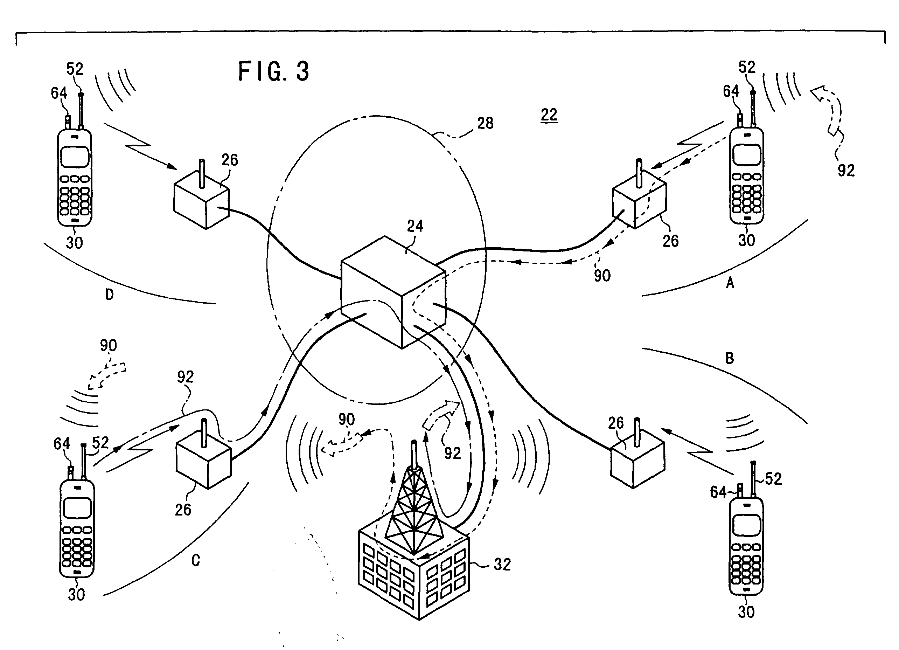

Subsequently, bidirectional communications, between the two mobile communication terminals 26 along the route represented by the dotted line 90 with arrowheads and the dot-and-dash line 92 with arrowheads shown in FIG. 3 until either one of the mobile communication terminals 26 is brought into an on-hook state, i.e., until the link is disconnected.

Specifically, communications from the mobile communication terminal 30 in the area A to the mobile communication terminal 30 in the area C are carried out along the route indicated by the dotted line 90 with arrowheads as follows: The information from the mobile communication terminal 30 in the area A is sent upstream from the transmission antenna 64 as a radio wave to the base station 26, from which the information is sent to the mobile communication exchange 24 of the ground circuit network 28. The information is then sent from the mobile communication exchange 24 to the transmission base station 32, from which the information is sent downstream as a broadcast radio wave carrying the information with the inherent identification code, e.g., the telephone number of the mobile communication terminal 30 in the area C. The mobile communication terminal 30 in the area C which is capable of discriminating the inherent identification code receives the information via the broadcast reception antenna 52.

Communications from the mobile communication terminal 30 in the area C back to the mobile communication terminal 30 in the area A are carried out along the route indicated by the dot-and-dash line 92 with arrowheads as follows: The information from the mobile communication terminal 30 in the area C is sent upstream from the transmission antenna 64 as a radio wave to the base station 26, from which the information is sent to the mobile communication exchange 24 of the ground circuit network 28. The information is then sent from the mobile communication exchange 24 to the transmission base station 32, from which the information is sent downstream as a broadcast radio wave carrying the information with the inherent identification code, e.g., the telephone number of the mobile communication terminal 30 in the area A. The mobile communication terminal 30 in the area A which is capable of discriminating the inherent identification code receives the information via the broadcast reception antenna 52.

In the illustrated embodiment, for sending a signal carrying information upstream from a source mobile communication terminal 30, the mobile communication terminal 30 may send a radio wave with the information only when it wants to send the information to a destination mobile communication terminal 30. The destination mobile communication terminal 30 receives the signal with the information sent downstream as a broadcast radio wave, as with conventional television and radio broadcasts. However, the mobile communication terminal 30 differs from conventional mobile communication terminals which receive broadcast radio waves in that the controller 40 determines whether the identification code added to the received signal carrying the information is an identification code allocated to its own mobile communication terminal 30 or not, and receives the information if the identification code is an identification code allocated to its own mobile communication terminal 30.

The mobile communication terminal 30 needs a broadcast signal receiving function (an RF receiving device and the reception antenna 52) similar to that of a radio set or a pager, unlike conventional mobile communication terminals such as portable telephone sets and PHS sets. However, since expensive devices including the LCD 48, the controller 48, the battery 62, etc. are the same as those of the conventional mobile communication terminals, any increase in the cost of the mobile communication terminal 30 is minimum though it has the same functions as those of the conventional mobile communication terminals.

The mobile communication terminal 30 may be arranged as follows: When a broadcast radio wave which is devoid of an inherent identification code is sent to the mobile communication terminal 30, the user of the mobile communication terminal 30 may operate the key switch assembly (function selecting means) 50 to change software in the controller 40 in order to receive the sent broadcast radio wave. Such a function allows the mobile communication terminal 30 to provide new services that have not been available in the conventional mobile communication systems. Specifically, the user can evenly send a signal from its own mobile communication terminal 30 to the base station 6, but can receive selectively a broadcast radio wave or an individual radio wave by changing software in the controller 40 of the mobile communication terminal 30.

The user of the mobile communication terminal 30 can operate the key switch assembly 50 to turn on or off the identification code discriminating function. The mobile communication terminal 30 may be arranged to be able to receive a broadcast radio wave irrespective of whether the identification code discriminating function is turned on or off.

For example, if the identification code discriminating function is turned on, then when the mobile communication terminal 30 receives a radio wave with an inherent identification code while receiving a broadcast radio wave, the mobile communication terminal 30 can receive the radio wave with the inherent identification code for bidirectional communications in preference to the reception of the broadcast radio wave.

According to the illustrated embodiment of the present invention, the mobile communication system 22 can be used in combination with an existing communication infrastructure, e.g., a mobile communication network, a public circuit network, a satellite communication network, portable telephone sets, PHS sets, radio sets, and pagers. Therefore, the mobile communication system 22 is not required to make substantial investments in the communication infrastructure, and can be constructed with a high investment efficiency.

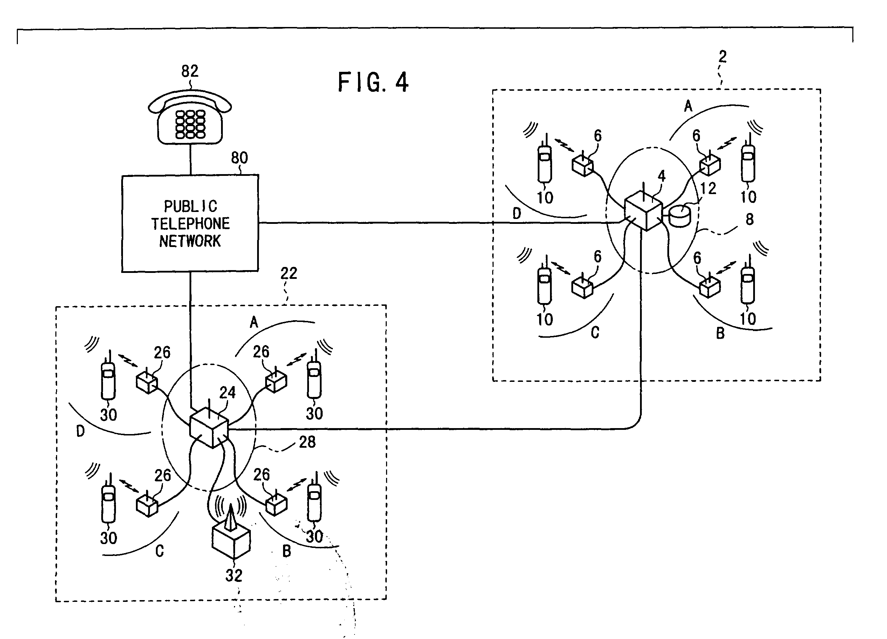

Specifically, FIG. 4 shows a communication network comprising the conventional mobile communication system 2 shown in FIG. 6, the mobile communication system 22 according to the present invention shown in FIG. 1, and a public telephone network 80 which are connected to each other. In the communication network shown in FIG. 4, any two of a telephone set 82 of the public telephone network 80, a mobile communication terminal 10 of the mobile communication system 2, and a mobile communication terminal 30 of the mobile communication system 22 can perform communications therebetween.

For example, the case will be described below when communications are performed between the mobile communication terminal 30 in the zone A of the mobile communication system 22 and the mobile communication terminal 10 in the zone A of the mobile communication system 2. It is supposed that the mobile communication terminal 10 is capable of receiving a broadcast radio wave in a similar level to the mobile communication terminal 30. In this case, the mobile communication terminal 30 in the zone A of the mobile communication system 22 sends information as a narrowcast communication, via the reception base station 26 and the mobile communication exchange 24 in the circuit network 28, to the transmission base station 32. The information is sent from the transmission base station 32 as a broadcast radio wave and is received by the mobile communication terminal 10 in the zone A of the mobile communication system 2. Further, the information sent from the mobile communication terminal 10 in the zone A of the mobile communication system 2 as a narrowcast communication reaches the reception base station 6 and is sent to the mobile communication exchange 4 in the circuit network 8. Then, the information is sent via the dedicated line to the circuit network 28 and the mobile communication exchange 24 of the mobile communication system 22, and finally received by the mobile communication terminal 30 in the zone A via the transmission base station 32.

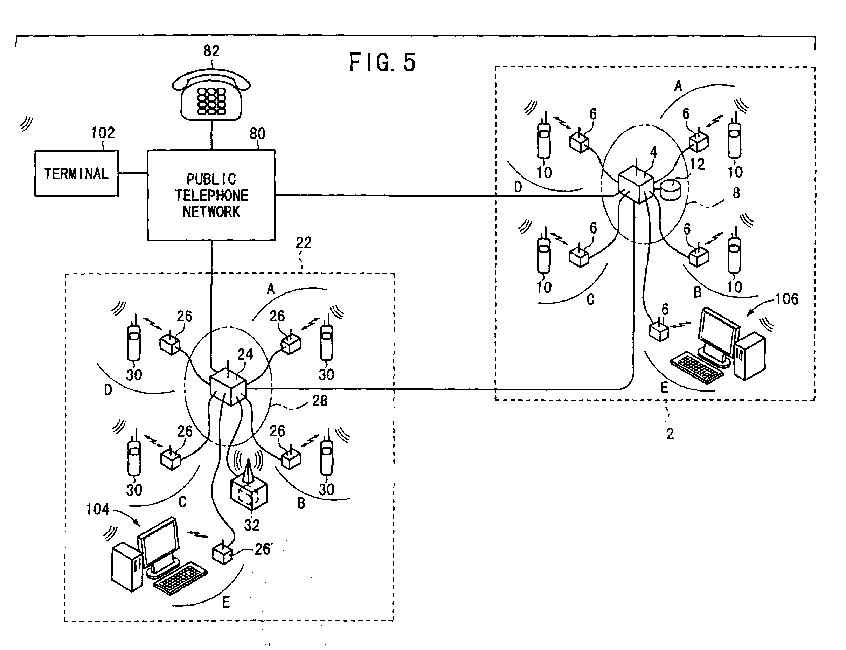

In FIG. 5, other embodiment is shown.

In this embodiment, terminals 102, 104, 106 of content providers, which operate as a server, are connected to all of the public telephone network 80, the mobile communication exchange 24, and the mobile communication exchange 4, respectively in the system shown in FIG. 4. There may be another embodiment in which the terminals of the content providers, which operate as a server, are connected to only one or two of the public telephone network 80, the mobile communication exchange 24, and the mobile communication exchange 4. The terminals 104, 106 of the content providers are covered by the base station 26 in a zone E of the mobile communication system 22, and the base station 6 in a zone E of the mobile communication system 2, respectively.

Each of the terminals 102, 104, 106 of the content providers is constituted as a terminal computer having a display, a keyboard, a mouse, etc. Further, the terminal computer also comprises elements corresponding to the broadcast reception antenna 52, the reception unit 54, the narrowcast transmission antenna 64, the antenna sharing unit 66, the transmission unit 56, the frequency synthesizer 58, the controller 40, the telephone receiver 42, the telephone transmitter 44, and the speaker 46, which are shown in FIG. 2.

Each of the terminals 102, 104, 106 of the content providers is connected to a database (not shown) to store contents.

The "contents" mentioned here includes various information such as screen images, images (including motion pictures and still pictures (photographs)), sounds, characters, numerical values, and numbers. The "contents" also includes programs or commercials reproduced on televisions or radio receivers, and information in magazines or newspapers.

In this case, e.g., when the mobile communication terminal 30 as a client in the zone A of the mobile communication system 22 is going to receive desired contents from the terminal 104 of the content provider, the mobile communication terminal 30 sends information upstream to the transmission base station 32. The information includes a request of transmitting the desired contents to the terminal 104 of the content provider, and reaches the transmission base station 32 via the base station 26, the circuit network 28, and the mobile communication exchange 24. Then, the information for requesting transmission is sent downstream as a radio wave from the transmission base station 32 to the terminal 104 of the content provider.

In the terminal 104 of the content provider, the contents corresponding to the received information for requesting transmission are retrieved from the above-mentioned database. An inherent identification code (in this case, the identification code such as the telephone number of the mobile communication terminal 30 in the zone A) is allocated to the retrieved contents information. The information with the identification code is sent upstream to the transmission base station 32 via the reception base station 26 and the mobile communication exchange 24 in the circuit network 28. The information with the identification code is sent downstream as a broadcast radio wave from the transmission base station 32.

In this case, the mobile communication terminal 30 in the zone A, which has sent the information for requesting transmission of the contents, is capable of obtaining the desired contents information when the inherent identification code is discriminated in the received contents information with the identification code.

Further, terminals of the content providers to be connected to the database (not illustrated) may be installed in the transmission base station 32, as shown in FIG. 5. In this arrangement, e.g., the information for requesting transmission of contents by the mobile communication terminal 30 is sent as a narrowcast communication to the terminal 108 of the content provider in the transmission base station 32 (via the reception base station 26, the mobile communication exchange 24 in the circuit network 28, and the transmission base station 32). Then, the contents information with an inherent identification code corresponding to the information for requesting transmission of the contents is sent as a broadcast radio wave to the mobile communication terminal 30 via the terminal 108 of the content provider and the transmission base station 32.

The mobile communication system 22 according to the present embodiments offers the following advantages:
(1) A mobile communication terminal 30 of the mobile communication system 22 shown in FIG. 1 does not send a radio wave unless it transmits information to another mobile communication terminal 30 or the like. Therefore, the communication traffic is much smaller than would be caused by the transmission of radio waves needed for all the mobile communication terminals 30 to indicate their own locations. Accordingly, the fixed fee (monthly charge or the like) which the users of the mobile communication terminals 20 have to pay is substantially low.
(2) Consequently, the mobile communication system 22 can operate under a fixed-fee-free, fully caller charged system where users of the ground circuit network 28 pay a communication charge for the actual time they have used the ground circuit network 28, and any users who have not used the ground circuit network 28 do not pay any communication charge at all. Such a fixed-fee-free, fully caller charged system has a great potential for the promotion and development of the mobile communication system 22.
(3) The mobile communication system 22 can exploit the existing mobile communication system 2 for most of its communication infrastructure including the mobile communication terminals 30. Therefore, any difference between the overhead of the communication infrastructure of the mobile communication system 22 which includes the transmission base station 32 and the overhead of the existing communication infrastructure is very small.
(4) A mobile communication terminal 30 does not need to send a continuous radio wave indicating its own position to the mobile communication exchange 24 of the ground circuit network 28. As a result, the average power consumption of the mobile communication terminal 30 is low. Stated otherwise, the period of time for which the mobile communication terminal 30 powered by the battery 62 can be used is extended. If the period of time for which the mobile communication terminal 30 can be used should remain constant, then the capacity of the battery 62 can be reduced, resulting in a reduction in the size and weight of the mobile communication terminal 30.
(5) The mobile communication terminal 30 sends information for requesting (designating) desired contents upstream as a narrowcast communication to the circuit network 28 via the reception base station 26. Information with the desired contents is transmitted downstream as a broadcast radio wave to the mobile communication terminal 30 via the transmission base station 32. Therefore, the communication traffic in the circuit network 28 etc. can be decreased by sending as a broadcast radio wave the contents having large data.

As described above, the present embodiments are effective in exploiting existing communication networks and existing devices as an infrastructure.

Furthermore, since mobile communication terminals are not required to send radio waves indicative of their own locations, the communication traffic can be reduced.

In addition, the mobile communication network according to the present embodiments offers a possibility to provide new services that have not been available in conventional mobile communication systems.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A mobile communication system comprising:
a circuit network (28);
a plurality of mobile communication terminals (30) for performing communications via said circuit network;
a plurality of reception base stations (26) connected to said circuit network, for receiving radio waves respectively from said mobile communication terminals within respective areas; and
at least one transmission base station (32) connected to said circuit network, for sending a radio wave to said mobile communication terminals from which at least said reception base stations can receive radio waves;
the arrangement being such that when communications are performed between said mobile communication terminals, one of the mobile communication terminals sends information upstream via the corresponding reception base station to said circuit network, and the information from said circuit network is sent downstream via said transmission base station on a radio wave to another of the mobile communication terminals.

2. A mobile communication system according to claim 1, wherein said one of the two mobile communication terminals sends a radio wave only when said information is to be sent to said other of the mobile communication terminals.

3. A mobile communication system according to claim 1 or 2, wherein each of said mobile communication terminals has a function to discriminate an inherent identification code, and wherein said transmission base station sends said information with an inherent identification code allocated thereto to said other of the mobile communication terminals, and said other of the mobile communication terminals is capable of receiving remaining information other than said inherent identification code only when said other of the mobile communication terminals discriminates said inherent identification code allocated to said information.

4. A mobile communication system according to any one of claims 1 to 3, wherein each of said mobile communication terminals doubles as a portable telephone set or a PHS terminal.

5. A mobile communication system according to any one of claims 1 to 4, wherein each of said mobile communication terminals doubles as a portable telephone set or a PHS terminal, and said inherent identification code comprises a telephone number assigned to said portable telephone set or said PHS terminal.

6. A mobile communication terminal, comprising:
a radio transmission assembly (56), (64) for sending information with a radio wave radiated thereby which covers a first range; and
a radio reception assembly (54), (52) for receiving information with a radio wave which can be received thereby in a second range, said first range being smaller than said second range.

7. A mobile communication terminal according to claim 6, wherein said radio transmission assembly comprises means for sending information with a narrowcast radio wave, and said radio reception assembly comprises means for receiving information with a broadcast radio wave.

8. A mobile communication terminal according to claim 7, having a function to discriminate an inherent identification code, the arrangement being such that if said function is turned on, then when said radio reception assembly receives a radio wave with an inherent identification code while the broadcast radio wave is being received, said radio reception assembly can receive the radio wave with the inherent identification code in preference to the broadcast radio wave.

9. A mobile communication terminal according to any one of claims 6 to 8, wherein each of said mobile communication terminals doubles as a portable telephone set or a PHS terminal, and said inherent identification code comprises a telephone number assigned to said portable telephone set or said PHS terminal.

10. A mobile communication system comprising:
a circuit network (28);
a plurality of reception base stations (26) connected to said circuit network, for receiving radio waves within respective areas;
at least one transmission base station (32) connected to said circuit network;
a plurality of mobile communication terminals (30);
each of said mobile communication terminals having an inherent identification code, a function to discriminate the inherent identification code, and a function to turn on and off said function;
the arrangement being such that when communications are performed between said mobile communication terminals, one of the mobile communication terminals sends information upstream via the corresponding reception base station to said circuit network, and the information from said circuit network is sent downstream via said transmission base station on a radio wave to another or a plurality of the mobile communication terminals;
that if said transmission base station sends said information with an inherent identification code allocated thereto, then the mobile communication terminal having said allocated inherent identification code is capable of receiving remaining information other than said inherent identification code only when said mobile communication terminal turns on the function to discriminate said inherent identification code; and
that if said transmission base station sends said information without an inherent identification code, then all the mobile communication terminals are capable of receiving the information irrespective of whether their function to discriminate said inherent identification code is turned on or off.

11. A mobile communication system comprising:
a circuit network (28);
a plurality of mobile communication terminals (30) for performing communications via said circuit network;
a plurality of reception base stations (26) connected to said circuit network, for receiving radio waves respectively from said mobile communication terminals within respective areas; and
at least one transmission base station (32) connected to said circuit network, for sending a radio wave to said mobile communication terminals from which at least said reception base stations can receive radio waves;
the arrangement being such that one of the mobile communication terminals sends information upstream via the corresponding reception base station to said circuit network, and the information is sent downstream via said transmission base station on a radio wave to said one of the mobile communication terminals.

12. A mobile communication system according to claim 11, wherein a terminal (104), (108) of a content provider is connected to said circuit network or said transmission base station, and wherein said one of the mobile communication terminals sends information upstream for requesting said terminal of the content provider to transmit desired contents and information of the desired contents is sent downstream from said terminal of the content provider to said one of the mobile communication terminals via said transmission base station.

13. A mobile communication system according to claim 11 or 12, wherein each of said mobile communication terminals has a function to discriminate an inherent identification code, and wherein said transmission base station sends said information with an inherent identification code allocated thereto to said one of the mobile communication terminals, and said one of the mobile communication terminals is capable of receiving remaining information other than said inherent identification code only when said one of the mobile communication terminals discriminates said inherent identification code allocated to said information.
